# EUROPEAN PATENT SPECIFICATION

(11) **EP 2 604 106 B1**
(45) Date of publication and mention of the grant of the patent: **21.01.2015**
(21) Application number: 12197607.0
(22) Date of filing: 17.12.2012
(51) Int. Cl.: A01G 3/037

(54) **Powered pruning shears**
Motorbetriebene Astschere
Sécateur motorisé

(30) Priority: 15.12.2011 IT MI20112279
(43) Date of publication of application: 19.06.2013
(73) Proprietor: DAVIDE E LUIGI VOLPI S.p.A., 46040 Casalromano (IT)
(72) Inventor: Caporali, Gabriele, 46040 Casalromano (IT)
(74) Representative: Bergadano, Mirko

(56) References cited:
- WO-A1-2011/025493
- DE-U1-202010 008 519

## Description

The present invention relates to a powered pruning shears.

A common type of powered pruning shears comprises a machine body, a pair of side by side blades, mounted on a rotation pivot and rotating with respect to one another, and a transmission connected to an electric motor for moving a blade with respect to the other. In general, a blade is fixed, i.e. is rigidly mounted onto the machine body, and the other is rotatable, operated by the transmission.

In the known solutions of this type, the rotation pivot is angularly fixed to the machine body and/or to the fixed blade and the movable blade rotates around the rotation pivot, see e.g. DE 20 2010 008 519 U1

This configuration is not, however, fully satisfactory in terms of simplicity of construction and reliability of operation.

In particular, the operation with fixed pivot requires the presence of an opening on the machine body, through which the actuator of the movable blade is arranged; but this opening connects the external environment with the internal mechanisms (mechanical members, electrical and electronic components) housed inside the machine body, with the result of bringing dirt and moisture thereto and, therefore, increasing the probability of mechanical failures, lower efficiency and more rapid wear.

Furthermore, the movable blade (worn or damaged) replacement operation is relatively complicated, generally also resulting in the need to open the machine body; the opening of the machine body for replacement of the blades also entails the need to perform the operation in an equipped and clean location to avoid the entry of dirt and/or moisture in the inner area of the machine body that may, subsequently, be harmful to the mechanical, electrical and electronic inner members.

It is an object of the present invention to provide a powered pruning shears that is devoid of the drawbacks of the prior art here highlighted; in particular, it is an object of the invention to provide a shears that is particularly simple to implement and reliable in use.

The present invention therefore relates to a powered pruning shears as defined in essential terms in the appended claim 1 and, in its additional characters, in the dependent claims.

In essence, according to the present invention the pivot on which the blades rotate is integral in rotation with the movable blade and, therefore, rotates during cutting. Conversely, the shears of the prior art have a fixed pivot (integral with the shears body) around which the movable blade rotates.

This configuration is particularly simple to implement and reliable, also obtaining the following specific benefits.

Firstly, the machine body (i.e., the body of the shears) can be obtained with a much greater seal-tightness with respect to known solutions. Shears having the fixed pivot in fact inevitably have an opening in the head required to operate with a fixed pivot but that puts the external environment in communication with the internal mechanisms (mechanical members, electrical and electronic components) housed inside the machine body, with the result of bringing dirt and moisture towards them and, therefore, increasing the probability of mechanical failures, lower efficiency and more rapid wear.

Secondly, the operation of replacing the movable blade is extremely simple. In fact, as a consequence of the technical solution adopted, it is not necessary to open the machine body (normally, formed by coupled shells) to replace the movable blade, but it is sufficient to loosen and remove an external locking element arranged on the pivot. The operation becomes simplified and can be individually completed by the user even on site, without the need to search for an equipped and clean location and, above all, without risking to let dirt and/or moisture enter into the inner zone of the machine body that may subsequently be harmful to the mechanical, electrical and electronics inner members.

According to a further aspect of the invention, the transmission of motion between the driving shaft and the rotation pivot of the blades is carried out by means of a transmission/reduction system that has a variable reduction ratio and not fixed, as is, instead, in traditional solutions.

In particular, the reduction ratio is minimum at the beginning and at the end of the cutting cycle and is maximum at the midpoint of the cycle. The speed of rotation of the pivot cutting is maximum at the beginning and at the end of the cutting cycle and is minimum at the midpoint of the cut.

In this way, the cut torque, associated directly to the force that the blades exert on the branch and to their effectiveness in the cut, is not constant throughout the cutting, but is greater in the more challenging cutting zone, i.e. in the middle of the branch, and less where it is not needed, i.e. at the beginning and at the end of the cut. All this increases the efficiency of the shears and turns out to be an optimization of the cutting conditions, without in any way modifying the total energy used to conclude a cut. In fact the energy most used in the midpoint of the cut, where the torque is higher, is balanced by the lower energy used at the beginning and at the end of the cut. The result is a more effective cut, with the ability to cut larger diameters with the same battery.

Clearly, the transmission/reduction system of variable ratio gear can also be applied independently, and therefore not necessarily only for pruning shears having the rotation pivot of the blades integral with the movable blade and rotating during cutting.

Further characteristics and advantages of the present invention will become clear from the following description of a not limiting embodiment, with reference to the figures of the accompanying drawings, wherein:

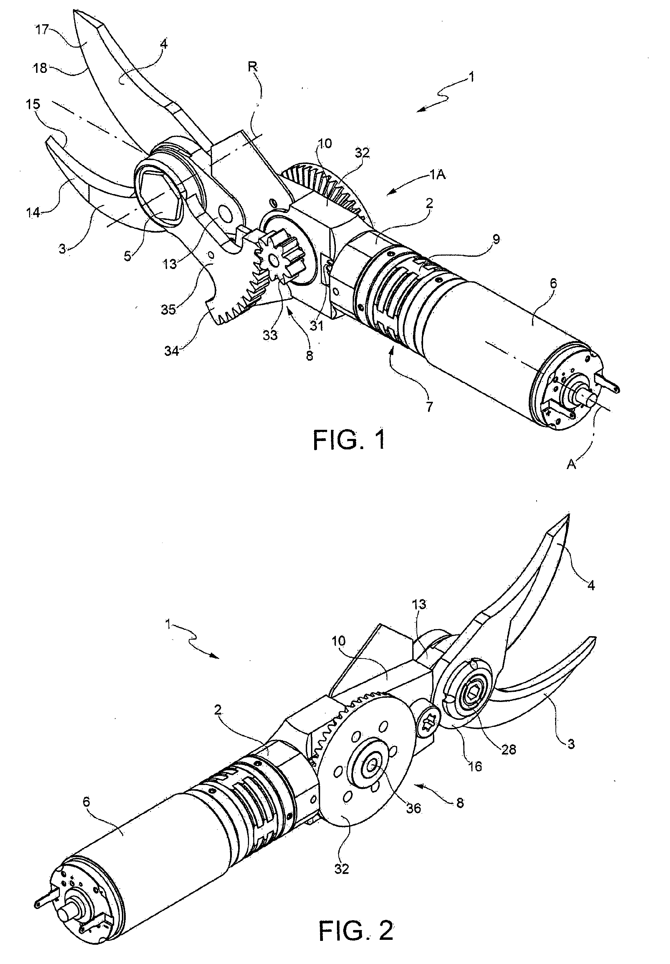

- Figures 1 and 2 are two schematic perspective views, taken from opposite sides, of a powered pruning shears according to the invention;
- Figures 3 and 4 are respectively a side view and a top view of the pruning shears of Figures 1, 2;
- Figure 5 is an enlarged view of the shears of Figure 4, partially sectioned.

With reference to the appended figures, a powered pruning shears 1 comprises a machine body 2, that projects substantially along a longitudinal axis A, a fixed blade 3, integrally carried by the machine body 2, a movable blade 4, rotatable with respect to the fixed blade 3 about a rotation axis R substantially perpendicular to the axis A of the machine body 2 by means of a rotation pivot 5, an electric motor 6 and a transmission/reduction system 7 which transfers the movement of the motor 6 to the movable blade 4 and is formed in particular by a transmission group 8 and, optionally, by a reducer 9.

For simplicity, shown in the appended figures is only one cutting head 1A of the shears 1, while are not illustrated further details and components of the shears 1, such as handle, controls operable by the user to actuate the shears 1, power supply systems of the motor 6, circuits and electrical connections, any electric and/or electronic control devices, etcetera.

The machine body 2 comprises a supporting portion 10, arranged at one axial end of the machine body 2 and that supports the blades 3, 4 and the transmission group 8; a second axial end of the machine body 2, opposite to the supporting portion 10, carries the motor 6 and optionally the gearbox 9.

The fixed blade 3 has a root portion 13 that projects longitudinally from the supporting portion 10 of the machine body 2 and is rigidly fixed to the supporting portion 10 (preferably, in a removable manner, so that the blade 3 is replaceable when worn or damaged), and a cutting portion 14, that projects from the root portion 13 and has a sharp edge 15.

The movable blade 4 has a connection portion 16 for connecting the fixed blade 3, and a cutting portion 17, that projects from the connecting portion 16 and has a sharp edge 18 facing the fixed blade 3 and cooperating in use with the edge 15 of the fixed blade 3.

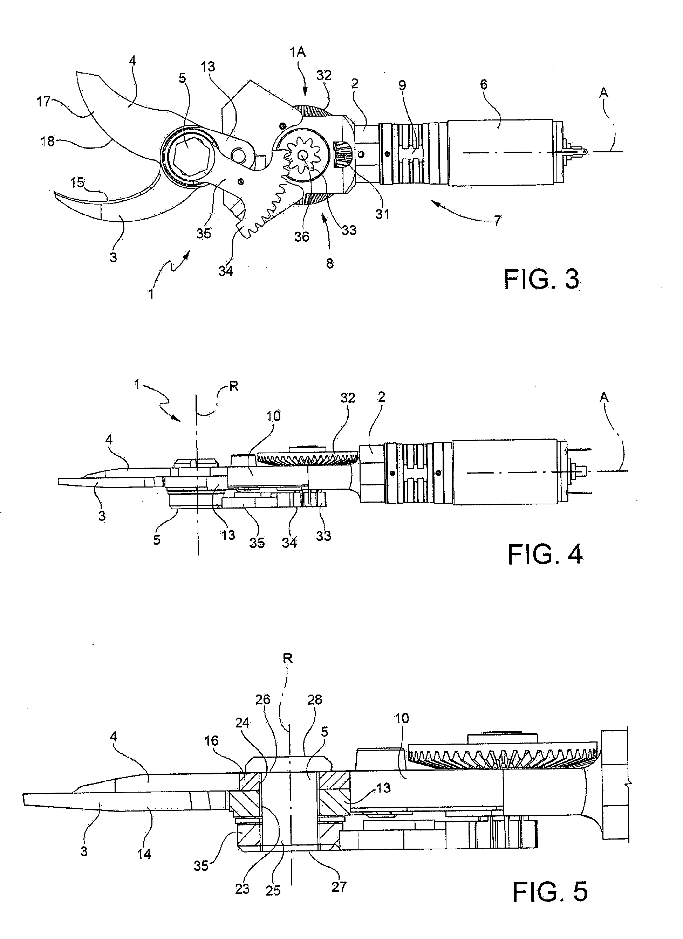

The root portion 13 of the fixed blade 3 and the connecting portion 16 of the movable blade 4 are provided with respective through holes 23, 24 (Figure 5) aligned along the rotation axis R and wherein the pivot 5 is housed.

The movable blade 4 is hinged to the fixed blade 3 by means of the pivot 5, which is arranged through the holes 23, 24.

The pivot 5 extends along the rotation axis R, substantially perpendicular to the axis A of the machine body 2, and is angularly integral with the movable blade 4 and rotates in use together with the blade 4 about the rotation axis R with respect to the fixed blade 3 of the machine body 2.

The pivot 5 extends between two opposite longitudinal ends 25, 26 set on opposite sides of the blades 3, 4 and adjacent to respective blades 3, 4; in particular, the end 25 protrudes from the hole 23 and from the root portion 13 of the fixed blade 3 and is provided with a head 27 adjacent to the blade 3; the end 26 exits the hole 24 of the connecting portion 16 of the movable blade 4 and is provided with a releasable locking device 28 fixing the pivot 5 to the movable blade 4.

The movable blade 4 is operated by the system 7 and specifically by the group 8, which in the non-limiting example illustrated comprises a plurality of toothed members and precisely: a pinion 31 connected to a driving shaft (not shown) of the motor 6, a gear wheel 32 that engages the pinion 31 and is substantially perpendicular to the pinion 31; a gear 33 that is angularly integral with the gear wheel 32; a curved rack 34 carried by an actuator arm 35 angularly fixed to the head 27 of the pivot 5.

The gear wheel 32 and the gear 33 are positioned on opposite sides of the machine body 2 and are connected by a transmission pin 36 set through the machine body 2. The gear 33 engages the rack 34, that projects along a sector of a circle positioned at one end of the actuator arm 35.

In use, the shears 1 performs a cutting cycle as follows: at the beginning of the cutting cycle the blades 3, 4 are spread apart and spaced from each other; when the shears 1 is actuated (by means of an actuator not shown for simplicity), the transmission/reduction system 7 transfers the movement of the motor 6 to the pivot 5 and then to the movable blade 4: in particular, the pivot 5 is rotated by the actuator arm 35, which is operated from the gear 33 cooperating with the rack 34. The actuator arm 35 is rigidly fixed to the pivot 5, which then rotates together with the actuator arm 35; the pivot 5 is also rigidly fixed to the movable blade 4, which also rotates together with the pivot 5; the rotation of the blade 4 movable about the rotation axis R brings the edge 18 to cooperate with the edge 15 of the fixed blade 3, for example to perform the cutting of a branch arranged between the blades 3, 4.

According to a further aspect of the invention, the transmission/reduction system 7, and in particular the transmission group 8 and/or the gearbox 9, are made so as to have variable reduction ratio.

In particular, the transmission group 8 and/or the gearbox 9 comprise toothed members having a geometry so as to obtain a variable reduction ratio.

More precisely, the system 7 (therefore the assembly of the transmission group 8 and the reduction gear 9) is configured so that the transmission of motion from the motor 6 to the pivot 5 (and therefore to the movable blade 4) takes place with minimum reduction ratio at the beginning and at the end of the cutting cycle and maximum at the midpoint of the cutting cycle. The rotation speed of the pivot 5 is maximum at the beginning and at the end of the cutting cycle and is minimum at the midpoint of the cutting cycle.

The desired effect (variable reduction ratio during the cutting cycle) is obtained with a suitable geometry of the toothed members which couple with each other and, in particular, of the toothed members of the transmission group 8. For example, the variable reduction ratio is obtained with gear wheels having pitch lines not circular, but elliptical.

Finally, it remains understood that to the shears herein described and illustrated may be made further modifications and variations that do not depart from the scope of the appended claims.

## Claims

1. A powered pruning shears (1), comprising a machine body (2), a fixed blade (3), integrally carried by the machine body (2), a movable blade (4), rotating with respect to the fixed blade (3) about a rotation axis (R) by means of a pivot (5) and operated by a transmission/reduction system (7) connectable to an electric motor (6); the shears (1) being **characterized in that** the pivot (5) is angularly integral with the movable blade (4) and rotates together with the movable blade (4) about the rotation axis (R).

2. The shears according to claim 1, wherein the pivot (5) is housed and rotates in a through hole (23) formed in a root portion (13), that projects from the machine body (2), of the fixed blade (3).

3. The shears according to claim 1 or 2, wherein the movable blade (4) is hinged to the fixed blade (3) via the pivot (5), which is housed through respective aligned holes (23, 24) formed through the blades (3, 4).

4. The shears according to one of the preceding claims, wherein the pivot (5) extends between two opposed longitudinal ends (25, 26) set on opposite sides of the blades (3, 4) and adjacent to respective blades (3, 4).

5. The shears according to claim 4, wherein a first end (25) of the pivot (5) is provided with a head (27) fixed to an actuation arm (35) connected to the transmission/reduction system (7).

6. The shears according to claim 4 or 5, wherein a second end (26) of the pivot (5) is provided with a releasable locking device (28) that fixes the pivot (5) to the movable blade (4).

7. The shears according to one of the preceding claims, wherein the transmission/reduction system (7) comprises: a pinion (31) connected to a driving shaft; a gear wheel (32) that engages the pinion (31) and is substantially perpendicular to the pinion (31); and a gear (33) that is angularly integral with the gear wheel (32) and engages a curved rack (34) carried by an actuation arm (35) fixed to the pivot (5).

8. The shears according to claim 7, wherein the gear wheel (32) and the gear (33) are positioned on opposite sides of the machine body (2) and are connected by a transmission pin (36) set through the machine body (2).

9. The shears according to one of the preceding claims, wherein the transmission/reduction system (7) has a variable reduction ratio and is configured so as to have a reduction ratio that is minimum at the beginning and at the end of a cutting cycle and a reduction ratio that is maximum at the midpoint of the cutting cycle.

## Patentansprüche

1. Motorisierte Baumschere (1), welche einen Maschinenkörper (2), eine feststehende Klinge (3), die integral vom Maschinenkörper (2) getragen wird, eine bewegbare Klinge (4), die sich bezüglich der feststehenden Klinge (3) um eine Rotationsachse (R) mittels einer Drehachse (5) dreht und durch ein Getriebe/Untersetzungssystem (7) betrieben wird, welches mit einem Elektromotor (6) verbindbar ist;
wobei die Schere (1) **dadurch gekennzeichnet ist, dass** die Drehachse (5) in Drehrichtung integral mit der bewegbaren Klinge (4) ist und sich zusammen mit der bewegbaren Klinge (4) um die Rotationsachse (R) dreht.

2. Schere nach Anspruch 1, wobei die Drehachse (5) in einem Durchgangsloch (23) aufgenommen ist und sich in diesem dreht, welches in einem Grundteil (13) der feststehenden Klinge (3) ausgeformt ist, der von dem Maschinenkörper (2) vorsteht.

3. Schere nach Anspruch 1 oder 2, wobei die bewegbare Klinge (4) scharnierartig an der feststehenden Klinge (3) über die Drehachse (5) befestigt ist, die durch jeweilige ausgerichtete Löcher (23, 24) aufgenommen wird, die durch die Klingen (3, 4) ausgebildet sind.

4. Schere nach einem der vorhergehenden Ansprüche, wobei die Drehachse (5) sich zwischen zwei entgegengesetzten Enden (25, 26) in Längsrichtung erstreckt, die auf entgegengesetzten Seiten der Klingen (3, 4) und benachbart zu den jeweiligen Klingen (3, 4) angeordnet sind.

5. Schere nach Anspruch 4, wobei ein erstes Ende (25) der Drehachse (5) mit einem Kopf (27) versehen ist, der an einem Betätigungsarm (35) befestigt ist, der mit dem Getriebe/Untersetzungssystem (7) verbunden ist.

6. Schere nach Anspruch 4 oder 5, wobei ein zweites Ende (26) der Drehachse (5) mit einer lösbaren Verriegelungsvorrichtung (28) versehen ist, welche die Drehachse (5) an der bewegbaren Klinge befestigt.

7. Schere nach einem der vorhergehenden Ansprüche, wobei das Getriebe/Untersetzungssystem (7) ein Ritzel (31) aufweist, welches mit einer Antriebswelle verbunden ist; ein Kegelrad (32), welches mit dem Ritzel (31) in Eingriff ist und im Wesentlichen senkrecht zum Ritzel (31) ist; und ein Zahnrad (33), welches in Drehrichtung integral bzw. unbeweglich bezüglich des Kegelrades (32) ist und mit einer gekrümmten Zahnstange bzw. einem Zahnsegment (34) in Eingriff steht, welches von einem Betätigungsarm (35) getragen wird, der an der Drehachse (5) befestigt ist.

8. Schere nach Anspruch 7, wobei das Kegelrad (32) und das Zahnrad (33) auf gegenüberliegenden Seiten des Maschinenkörpers (2) positioniert sind und durch einen Übertragungsbolzen (36) verbunden sind, der durch den Maschinenkörper (2) angeordnet ist.

9. Schere nach einem der vorhergehenden Ansprüche, wobei das Getriebe/Untersetzungssystem (7) ein variables Untersetzungsverhältnis hat und so konfiguriert ist, dass es ein Untersetzungsverhältnis hat, welches zum Beginn und zum Ende eines Schneidzyklus minimal ist, und ein Untersetzungsverhältnis hat, welches in der Mitte des Schneidzyklus maximal ist.

## Revendications

1. Sécateur motorisé (1) comprenant un corps de machine (2), une lame fixe (3), portée de manière solidaire par le corps de machine (2), une lame mobile (4), tournant par rapport à la lame fixe (3) autour d'un axe de rotation (R) au moyen d'un pivot (5) et actionnée par un système de transmission/réduction (7) pouvant être raccordé à un moteur électrique (6), le sécateur (1) étant **caractérisé en ce que** le pivot (5) est angulairement solidaire par rapport à la lame mobile (4) et tourne conjointement avec la lame mobile (4) autour de l'axe de rotation (R).

2. Sécateur selon la revendication 1, **caractérisé en ce que** le pivot (5) est logé et tourne dans un trou débouchant (23) formé dans une partie d'emplanture (13), qui fait saillie du corps de machine (2), de la lame fixe (3).

3. Sécateur selon l'une des revendications 1 ou 2, **caractérisé en ce que** la lame mobile (4) est articulée par rapport à la lame fixe (3) via le pivot (5), qui est logé dans des trous (23, 24) respectifs alignés, formés à travers les lames (3, 4).

4. Sécateur selon l'une quelconque des revendications précédentes, **caractérisé en ce que** le pivot (5) s'étend entre deux extrémités longitudinales (25, 26) opposées placées sur les côtés opposés des lames (3, 4) et adjacentes aux lames (3, 4) respectives.

5. Sécateur selon la revendication 4, **caractérisé en ce qu'**une première extrémité (25) du pivot (5) est prévue avec une tête (27) fixée sur un bras d'actionnement (35) raccordé au système de transmission/réduction (7).

6. Sécateur selon l'une des revendications 4 ou 5, **caractérisé en ce qu'**une seconde extrémité (26) du pivot (5) est prévue avec un dispositif de verrouillage amovible (28) qui fixe le pivot (5) sur la lame mobile (4).

7. Sécateur selon l'une quelconque des revendications précédentes, **caractérisé en ce que** le système de transmission/réduction (7) comprend : un pignon (31) raccordé à un arbre d'entraînement, une roue dentée (32) qui met en prise le pignon (31) et est sensiblement perpendiculaire au pignon (31), et un engrenage (33) qui est angulairement solidaire par rapport à la roue dentée (32) et met en prise une crémaillère incurvée (34) portée par un bras d'actionnement (35) fixé au pivot (5).

8. Sécateur selon la revendication 7, **caractérisé en ce que** la roue dentée (32) et l'engrenage (33) sont positionnés sur des côtés opposés du corps de machine (2) et sont raccordés par une broche de transmission (36) placée à travers le corps de machine (2).

9. Sécateur selon l'une quelconque des revendications précédentes, **caractérisé en ce que** le système de transmission/réduction (7) a un rapport de réduction variable et est configuré pour avoir un rapport de réduction qui est minimal au début et à la fin d'un cycle de coupe et un rapport de réduction qui est maximal au milieu du cycle de coupe.
